# EUROPEAN PATENT SPECIFICATION

(11) **EP 4 676 281 B1**
(45) Date of publication and mention of the grant of the patent: **22.07.2026**
(21) Application number: 24833936.8
(22) Date of filing: 16.12.2024
(51) Int. Cl.: A47J 31/06, A47J 31/36, A47J 31/42

(54) **ROTATABLE ARRANGEMENT OF A PORTAFILTER RELATIVE TO A MAIN HOUSING OF A MAIN UNIT OF A COFFEE MACHINE**
DREHBARE ANORDNUNG EINES SIEBES RELATIV ZU EINEM HAUPTGEHÄUSE EINER HAUPTEINHEIT EINER KAFFEEMASCHINE
AGENCEMENT ROTATIF D'UN PORTE-FILTRE PAR RAPPORT À UN BOÎTIER PRINCIPAL D'UNE UNITÉ PRINCIPALE D'UNE MACHINE À CAFÉ

(30) Priority: 18.12.2023 EP 23217589
(43) Date of publication of application: 14.01.2026
(73) Proprietor: Versuni Holding B.V., 1082 MD Amsterdam (NL)
(72) Inventor: RIJSKAMP, Peter, 5656 AE Eindhoven (NL)
(74) Representative: Vollering, Stefanus Franciscus Maria
(86) International application number: PCT/EP2024/086504
(87) International publication number: WO 2025/132175

(56) References cited:
- WO-A1-2021/130384
- ES-A1- 2 373 898
- US-A1- 2017 119 195

## Description

### FIELD OF THE INVENTION

The invention relates to a coffee machine, comprising a main unit comprising a main housing accommodating a ground coffee supply unit including a ground coffee outlet and a brew water supply unit including a brew water outlet; and a portafilter configured to be put to a functional condition in which the portafilter is removably combined with the main unit.

### BACKGROUND OF THE INVENTION

It is well known that coffee made from freshly ground beans gives better quality than pre-ground coffee. Often, fresh beans are used when making espresso coffee.

There are many different types of commercially available espresso coffee machine, for use in the home, or in bars, restaurants and hotels. The answer to the question which type of machine is appropriate in a particular setting depends on the expected amount of use, and of course also on the budget.

In a manually operated espresso machine, a user fills a coffee receiving vessel referred to as portafilter with coffee grounds. The user then tamps the coffee grounds in the portafilter with sufficient pressure, such as a pressure of about 200 N, to create a so-called puck in the portafilter. Subsequently, the user mounts the portafilter to the main unit of the coffee machine, usually through a bayonet-type of connection. The coffee machine is operated to drive hot water through the puck in the portafilter and the coffee that is obtained in this way is dispensed via a spout that is typically integrated in the portafilter. After brewing, the user needs to disconnect the portafilter from the main unit and empty the portafilter, throwing away the used coffee grounds. In a bar setting, the manual process is conducted by the barista. In a domestic setting, the manual process makes the user feel involved in the coffee making process, and hence provides the user with a feeling of performing the role of a barista.

Manually operated espresso machines with an integrated grinder are known in the art. In the case of such machines, a user is supposed to switch the portafilter between a first position relative to the main housing for receiving ground coffee and a second position relative to the main housing for brewing coffee. Tamping may be done manually or via a manually operated lever of the machine.

In a fully automatic espresso machine, all of the above-mentioned steps are done automatically, in one and the same machine. The machine comprises a bean container and a grinder to make the coffee grounds. These grounds are transported into a brew chamber and tamped automatically, by means of a piston that may be hydraulically or mechanically actuated such as by means of an electromotor. Next, hot water is driven through the coffee grounds in the brew chamber, coffee is brewed and dispensed in a receptacle, and the used coffee grounds are discharged from the brew chamber into a waste bin within the machine. Thus, in the case of fully automatic espresso machines, the manual steps required in the case of a manually operated espresso machine are removed, which saves time. Moreover, more uniform results are ensured.

A manually operated espresso machine can be produced at lower cost than a fully automatic espresso machine. Also, a manually operated espresso machine requires less maintenance than a fully automatic espresso machine, mainly because there may be less waste water in the drip tray and the coffee puck is removed after every coffee brewing action by the user. However, the results of using a manually operated espresso machine may be less uniform due to the user involvement in the processes of filling the portafilter and tamping the coffee grounds in the portafilter into a puck. A fully automatic espresso machine gives more consistent results, but using a fully automatic espresso machine removes the barista feel associated with using a manually operated espresso machine. A fully automatic espresso machine generally is also more complex, more expensive, and bigger than a manually operated espresso machine.

A third type of coffee machine has been proposed, particularly a type which combines aspects from the manually operated espresso machine and the fully automatic espresso machine. In the present text, this third type of coffee machine is referred to as hybrid coffee machine. For example, US 9,125,519 B2 relates to a coffee machine that is equipped with a removable portafilter, and that also comprises a grinder at an interior position in the main unit of the coffee machine and configured to load the portafilter in the functional condition on the main unit with coffee powder from the top. Further, a lid or a plunger is present in the main unit to close the portafilter in the main unit and to tamp the coffee powder in the portafilter. The portafilter as closed by the lid or plunger functions as the brew chamber. After brewing, the emptying of the portafilter needs to be done manually again. Thus, an extensive mechanism as known from fully automatic espresso machines is omitted while the operating effort is not significantly increased compared to a need to periodically empty and clean a waste bin for the coffee grounds. The coffee machine may particularly comprise a distribution filter element that can be moved back and forth between a position in which the portafilter is open and can be filled with coffee powder and a second position in which the distribution filter element closes the portafilter in a pressure-tight manner. To move the distribution filter element between the first and second position an electrically or hydraulically operating drive unit can be used. The distribution filter element is embodied constructively for introducing the pressurized hot water into the portafilter and can also be useful for tamping the coffee powder as present in the portafilter into the necessary puck.

As mentioned, the hybrid coffee machine combines aspects from the manually operated espresso machine and the fully automatic espresso machine. In fact, as follows from the description of the hybrid coffee machine known from US 9,125,519 B2, the user of the hybrid coffee machine only needs to connect the empty portafilter to the main unit of the coffee machine. Grinding of the coffee beans, dosing of the ground coffee in the portafilter, and tamping of the ground coffee take place in an automated manner as in a fully automatic espresso machine, and also brew water delivery and coffee dispensing are fully automated actions. After brewing, the user needs to disconnect the portafilter from the main unit and discharge the coffee waste, similar to what is known from the context of manually operated espresso machines.

WO2021/130384 discloses a hybrid coffee machine with a water delivery head that is positionally fixed and a portafilter that can be moved relative to said water delivery head between a first position, in which the portafilter is open, for receiving coffee powder, and a second position, in which the portafilter is closed by, and coffee powder contained in the portafilter is compressed against the water delivery head.

US2017119195 discloses a coffee machine with a grinder, a brew water outlet and a brew chamber. The brew chamber is divided into sub chambers and can be rotated to position one of the sub chambers below the grinder and water outlet, for receiving coffee powder and brew water. After a brew, the brew chamber can be rotated to position another sub chamber below the grinder and water outlet, for a new brew.

Relating to a coffee machine comprising a main unit and a removable portafilter, and also a ground coffee supply unit and a brew water supply unit accommodated in a main housing of the main unit, the invention is in the field of hybrid coffee machines. It is an object of the invention to provide a coffee machine of uncomplicated and compact design, which can be easily and intuitively controlled by a user in such a way that the user can have an experience that is comparable to the real barista experience.

### SUMMARY OF THE INVENTION

The invention provides a coffee machine, comprising: a main unit comprising a main housing accommodating a ground coffee supply unit including a ground coffee outlet and a brew water supply unit including a brew water outlet; a portafilter configured to be put to a functional condition in which the portafilter is removably combined with the main unit and, optionally, a portafilter carrier configured to receive and accommodate the portafilter in the functional condition, wherein: the portafilter in the functional condition is rotatable relative to the main housing about a rotation axis defined by a central longitudinal axis of the portafilter; with the portafilter at a first angular position about the rotation axis, the portafilter and the ground coffee outlet are at a relative position at which the portafilter is enabled to receive ground coffee from the ground coffee outlet; and with the portafilter at another, second angular position about the rotation axis, the portafilter and the brew water outlet are at a relative position at which the portafilter is enabled to receive brew water from the brew water outlet.

It follows from the above definition that in the coffee machine according to the invention, the portafilter in the functional condition is rotatable relative to the main housing about a rotation axis defined by a central longitudinal axis of the portafilter. Optionally, the portafilter may be accommodated in a portafilter carrier in the functional condition. The portafilter carrier may have a function in guiding the portafilter as the portafilter is rotated from the first angular position about the rotation axis to the second angular position about the rotation axis. In such case either the portafilter or the portafilter carrier or both may be rotatable relative to the main housing about the rotation axis.

One functional angular position of the portafilter and/or the optional portafilter carrier about the rotation axis is a first position in which the portafilter and the ground coffee outlet are at a relative position at which the portafilter is enabled to receive ground coffee from the ground coffee outlet. Another functional angular position of the portafilter and/or the optional portafilter carrier about the rotation axis is a second position in which the portafilter and the brew water outlet are at a relative position at which the portafilter is enabled to receive brew water from the brew water outlet.

When the portafilter is not in the functional condition, the portafilter is separate from the main unit. In view thereof, the portafilter is also referred to as exterior portafilter. A practical option that is within the context of the invention is an option according to which the main housing is configured to receive the portafilter in a designated area. This designated area may comprise the optional portafilter carrier. The main housing may include an exterior mounting port, i.e. a mounting port that is accessible from the exterior of the main housing for mounting the portafilter. At the start of a new coffee brewing action (in this description also referred to as brew cycle), the portafilter may, for example, be mounted in the main housing (in the designated area, in the exterior mounting port and/or in the portafilter carrier) in the first angular position wherein the portafilter is enabled to receive ground coffee from the ground coffee outlet. Alternatively, at the start of a new brew cycle, the portafilter may be mounted in the main housing in a receipt angular position (hereinafter also referred to as placement and removal position) that does not coincide with the first or second angular position about the rotation axis, but for instance is located upstream of the first angular position (as seen in rotation direction from first to second angular position) or in between the first and the second angular position.

Bringing the portafilter from the receipt angular position to the first angular position may be a non-automated action, so that this is an action that needs to be performed by a user. This may provide the user with the experience of actively contributing to the coffee making process and controlling the coffee making process. Once the portafilter is at the first angular position about the rotation axis, the action of delivering ground coffee to the portafilter can be performed. In this respect, it is possible that the user is requested to activate the coffee machine in a separate step to perform the ground coffee delivery action, such as through pressing a button or interacting with a touch screen. Alternatively, it is possible that the coffee machine comprises an arrangement that is actuable under the influence of the portafilter and/or the optional portafilter carrier being put to the first angular position about the rotation axis to initiate supply of ground coffee to the portafilter through the ground coffee outlet. In other words, it is possible that with the portafilter and/or the optional portafilter carrier being at the appropriate position, namely the first angular position about the rotation axis, the action of grinding coffee beans and/or delivering the ground coffee to the portafilter is initiated automatically. To that end, the coffee machine may be equipped with a suitable sensor arrangement, for example a Hall sensor or an optical sensor. A purely mechanical arrangement (e.g. a mechanical switch) is also feasible.

After the delivery of ground coffee to the portafilter has taken place, the portafilter is ready to be rotated from the first angular position about the rotation axis to the second angular position about the rotation axis. The coffee machine can be configured to only enable manual rotation of the portafilter. Alternatively, the coffee machine may comprise a driving mechanism configured to bring about rotation of the portafilter about the rotation axis, for example from the first angular position about the rotation axis to the second angular position about the rotation axis so that the user is not required to bring about the necessary rotation of the portafilter, at least not all of the necessary rotation. Once the portafilter is at the second angular position about the rotation axis, the actions of creating the coffee puck by tamping the ground coffee in the portafilter and supplying brew water to the puck can be performed. In this respect, it is possible that the user is requested to activate the coffee machine in at least one separate step to perform the actions, such as through pressing a button or interacting with a touch screen. Alternatively, it is possible that the coffee machine comprises an arrangement that is actuable under the influence of the portafilter being put to the second angular position about the rotation axis to initiate supply of brew water to the portafilter through the brew water outlet, and possibly also to initiate the preceding tamping action. In other words, it is possible that with the portafilter being at the appropriate position, namely the second angular position about the rotation axis, at least the action of brewing coffee at the position of the portafilter is initiated automatically. To that end, the coffee machine may be equipped with a suitable sensor arrangement, like aforementioned optical sensor or Hall sensor. A purely mechanical arrangement such as a switch is also feasible. Thus, according to one embodiment of a coffee machine according to the invention, a user may simply initialize a brew cycle by bringing the portafilter and/or portafilter carrier into the first angular position about the rotation axis. The remainder of the brew cycle (grinding, delivery of ground coffee into the portafilter, rotation of the portafilter from the first angular position to the second angular position, creating the coffee puck by tamping the ground coffee in the portafilter and brewing coffee by supplying brew water to the puck) may then be automatically performed, without further user involvement being needed, like in a fully automatic espresso machine.

After the coffee brewing action has taken place, the user is supposed to remove the portafilter from the main housing and empty the portafilter. An embodiment of the portafilter in which the portafilter comprises a filter basket and a handle extending outwardly from the filter basket is commonly known. In that case, the central longitudinal axis of the portafilter is the central longitudinal axis of the filter basket, which usually has a circular periphery. By holding the portafilter at the position of the handle, the user is capable of manipulating the portafilter in a convenient and easy manner. This also applies to any user action as may be needed in rotating the portafilter in the functional condition.

The invention covers any suitable design of the main unit for enabling the combination of the portafilter with the main unit and allowing rotation of the portafilter about the rotation axis. As suggested earlier, the main housing may include an exterior mounting port, in which case it may be practical if the exterior mounting port comprises a space for at least partially accommodating the filter basket of the portafilter in the functional condition.

The invention covers an advantageous option of using the rotation of the portafilter to vary a position of the portafilter in the longitudinal direction relative to the main housing. The longitudinal direction is the direction in which the rotation axis extends. In normal use, the longitudinal direction may correspond to the vertical direction. To this end, the coffee machine may comprise a level setting mechanism configured to vary a position of the portafilter in the longitudinal direction relative to the main housing in dependence on the angular position of the portafilter about the rotation axis. The fact is that varying the position of the portafilter in the longitudinal direction relative to the main housing may be a way of having the ground coffee outlet and the brew water outlet at different levels in the main housing and displacing the portafilter between them by only rotating the portafilter about the rotation axis. For example, the brew water outlet may be at a higher level in the main housing than the ground coffee outlet, in which case it is practical if the level setting mechanism is configured to set a higher position of the portafilter in the longitudinal direction relative to the main housing at the second angular position about the rotation axis than at the first angular position about the rotation axis.

The level setting mechanism may be realized in any suitable manner, such as in a purely mechanical manner. A practical option in this respect is an option according to which the level setting mechanism comprises a pin-groove combination in which the groove accommodates the pin and dictates the path of the pin in the longitudinal direction as the portafilter and/or the optional portafilter carrier is rotated about the rotation axis.

Advantageously, the groove is shaped to define at least the position of the portafilter in the longitudinal direction relative to the main housing at the first angular position about the rotation axis and the position of the portafilter in the longitudinal direction relative to the main housing at the second angular position about the rotation axis as stable positions in the longitudinal direction.

Additionally or alternatively, the groove may be in the shape of a closed loop. This implies that the portafilter and/or the optional portafilter carrier follow different paths during rotation from the first angular position about the rotation axis to the second angular position about the rotation axis and during rotation from the second angular position about the rotation axis to the first angular position about the rotation axis. Forcing the portafilter to move along different paths may help prevent that the portafilter is rotated back from the second angular position about the rotation axis to the first angular position about the rotation axis without being emptied. Advantageously, the return path from the second angular position about the rotation axis to the first angular position about the rotation axis may be provided with a mandatory stop position where the portafilter must be removed and emptied first, before continuation along the path is possible.

Additionally or alternatively, the groove may be designed with one or more ratchet-like teeth that allow movement of the pin in one direction but block movement in the opposite direction.

More generally, the coffee machine according to the invention may comprise a guiding mechanism (including or excluding aforementioned level setting mechanism) wherein the guiding mechanism is configured to allow rotation of the portafilter and/or the optional portafilter carrier from the first angular position about the rotation axis to the second angular position about the rotation axis, and block rotation in the opposite direction. With such guiding mechanism it may be prevented that the portafilter is returned to the first angular position (the coffee receiving position) while the portafilter is still full with ground coffee from a previous brew cycle.

Additionally or alternatively, the ground coffee outlet is displaceable in the main housing. In such case, the coffee machine may comprise a ground coffee outlet positioning mechanism configured to vary a position of the ground coffee outlet in the main housing in dependence on the angular position of the portafilter and/or the optional portafilter carrier about the rotation axis. Having such a coffee outlet positioning mechanism provides a practical way of ensuring that with the portafilter at a first angular position about the rotation axis, the portafilter and the ground coffee outlet are at a relative position at which the portafilter is enabled to receive ground coffee from the ground coffee outlet, while also having a possibility of putting the ground coffee outlet to a non-functional position in the main housing during the time that the portafilter is not at the first angular position about the rotation axis. This may especially be practical if the coffee machine comprises the level setting mechanism mentioned earlier or if the position of the brew water outlet is variable in the longitudinal direction, because this may provide a way of having the ground coffee outlet more or less aligned with the brew water outlet in the longitudinal direction, at a position between the portafilter and the brew water outlet, when the portafilter is at the first angular position about the rotation axis, and of moving the ground coffee outlet from between the portafilter and the brew water outlet when the portafilter is rotated from the first angular position about the rotation axis to the second angular position about the rotation axis.

The ground coffee outlet positioning mechanism may be designed in any suitable way. It may be practical if the ground coffee outlet positioning mechanism is configured to establish a mechanical link between the portafilter and/or the optional portafilter carrier on the one hand and the ground coffee outlet on the other hand. The mechanical link may be of either direct or indirect nature. For example, the ground coffee outlet positioning mechanism may be designed to function on the basis of a rack-pinion combination.

An advantage of having a portafilter carrier as mentioned, is that the portafilter carrier can be designed with all the features that may be necessary to enable all positioning options and any other functionality of the portafilter as desired so that there is no need to provide the portafilter itself with those features. As a result, the portafilter may be of simple, robust design, devoid of fragile or sensitive element(s) which might otherwise constitute a hindrance to using and manipulating the portafilter, especially when the portafilter is removed from the main unit. Instead, such elements may be arranged on the portafilter carrier, which may be non-removably arranged at or in the main unit.

Optionally, a releasable locking mechanism may be provided, configured to lock the portafilter in place on the portafilter carrier. The locking mechanism may for instance include a snap finger or a locking spring. Having such a locking mechanism may provide tactile feedback to a user and help the user in knowing when the portafilter has been placed correctly in the portafilter carrier. The locking mechanism may also contribute to stability and safety.

Advantageously, the coffee machine comprises a blocking arrangement that is configured to allow the portafilter to be in the first angular position about the rotation axis only one time after having been combined with the main unit. This may constitute an alternative or additional way to avoid aforementioned situation in which the user accidentally moves the portafilter to the first angular position about the rotation axis after a coffee making process has been performed, so that it cannot happen that a fresh amount of ground coffee is deposited on top of a used puck. Using the blocking arrangement may help the user in realizing that the portafilter needs to be removed from the main unit and emptied. In a practical example, the blocking arrangement may comprise a blocking mechanism configured to mechanically block a path for the portafilter towards the first angular position about the rotation axis in an actuated condition and to leave the path open in a default condition. Such a blocking mechanism may be configured to mechanically interact with the portafilter to assume the actuated condition when the portafilter is at the first angular position about the rotation axis or during rotation of the portafilter away from the first angular position about the rotation axis. Alternatively, it is possible that the blocking arrangement comprises a setting mechanism configured to only set the actuated condition of the blocking mechanism when the portafilter is at the first angular position about the rotation axis or during rotation of the portafilter away from the first angular position about the rotation axis, which setting mechanism may comprise an electronic detection circuit, for example.

Further practical options relating to the coffee machine according to the invention include the following: 1) the coffee machine comprises a closing and tamping system configured to close the portafilter and to provide tamping of ground coffee contained in the portafilter, and arranged to interact with the portafilter while or after the portafilter is rotated from the first angular position about the rotation axis to the second angular position about the rotation axis; the closing and tamping system may comprise a piston. The piston may comprise the brew water outlet. The piston may be hydraulically or mechanically actuated; 2) the coffee machine comprises a holder arrangement configured to keep a position of the portafilter in the longitudinal direction in the main housing fixed as long as the portafilter is at the second angular position about the rotation axis. The holder arrangement may for example comprise elements for establishing a bayonet coupling with the portafilter; and 3) the ground coffee supply unit comprises a grinder. The ground coffee supply unit may further comprise a coffee bean reservoir.

The above-described and other aspects of the invention will be apparent from and elucidated with reference to the following detailed description of a practical embodiment of a coffee machine comprising a main unit and a portafilter that is to be combined with the main unit for the purpose of realizing a coffee making process (brew cycle) by means of the coffee machine, and that is to be removed from the main unit after a coffee making process has taken place.

### BRIEF DESCRIPTION OF THE DRAWINGS

The invention will now be explained in greater detail with reference to the figures, in which equal or similar parts are indicated by the same reference signs, and in which:
Figure 1 diagrammatically shows a perspective view of a coffee machine according to an embodiment of the invention, including a main unit and a portafilter, wherein a functional condition of the portafilter is illustrated;
Figure 2 diagrammatically shows three different angular positions of the portafilter relative to a main housing of the main unit;
Figures 3 and 4 illustrate a first possible hydraulic layout of the coffee machine, wherein figures 3 and 4 show conditions of the coffee machine which are different from each other as far as positions relative to the main housing of a number of components including the portafilter are concerned;
Figures 5 and 6 illustrate a second possible hydraulic layout of the coffee machine, wherein figures 5 and 6 show conditions of the coffee machine which are different from each other as far as positions relative to the main housing of a number of components including the portafilter are concerned;
Figure 7 shows a pin-groove combination that is functional to determine a level of the portafilter relative to the main housing in dependence on an angular position of the portafilter relative to the main housing; and
Figure 8 illustrates a path of the pin in the groove of the pin-groove combination.

### DETAILED DESCRIPTION OF EMBODIMENTS

The figures show embodiments of a coffee machine 100 comprising a main unit 10 and a portafilter 20. The main unit 10 comprises a main housing 11 accommodating a ground coffee supply unit 30 including a ground coffee outlet 31 and a brew water supply unit 40 including a brew water outlet 41. In the present embodiments of the coffee machine 100, the ground coffee supply unit 30 further includes a coffee bean reservoir 32 and a grinder 33, and the brew water supply unit 40 includes a heater 42 and a fluid coupling 43 between the heater 42 and the brew water outlet 41, which will hereinafter be referred to as delivery fluid coupling 43. The heater 42 may be of any suitable type, such as a flow through heater, a thermoblock, a thick film heater, etc. and the delivery fluid coupling 43 may comprise a system of conduits. The brew water outlet 41 may be in the form of a suitable water delivery head arranged at an end of a conduit of the delivery fluid coupling 43, for example, which water delivery head may comprise a water distribution disc or the like.

The portafilter 20 is intended to be used in two conditions, namely a functional condition in which the portafilter 20 is removably combined with the main unit 10, and a removed condition in which the portafilter 20 is separate from the main unit 10. If a user of the coffee machine 100 intends to operate the coffee machine 100 for the purpose of making a coffee drink, it is necessary that the user takes action aimed at putting the portafilter 20 in the functional condition if the portafilter 20 is found to be in the removed condition. The portafilter 20 comprises a filter basket 21 and a handle 22 extending outwardly from the filter basket 21.

In the present embodiments, the coffee machine 100 further comprises a water reservoir 50, a flow meter 51, a pump 52, a fluid coupling 53 between the reservoir 50 and the flow meter 51, a fluid coupling 54 between the flow meter 51 and the pump 52, and a fluid coupling 55 between the pump 52 and the heater 42. Also, the coffee machine 100 comprises a controller 60 configured to control operation of the coffee machine 100.

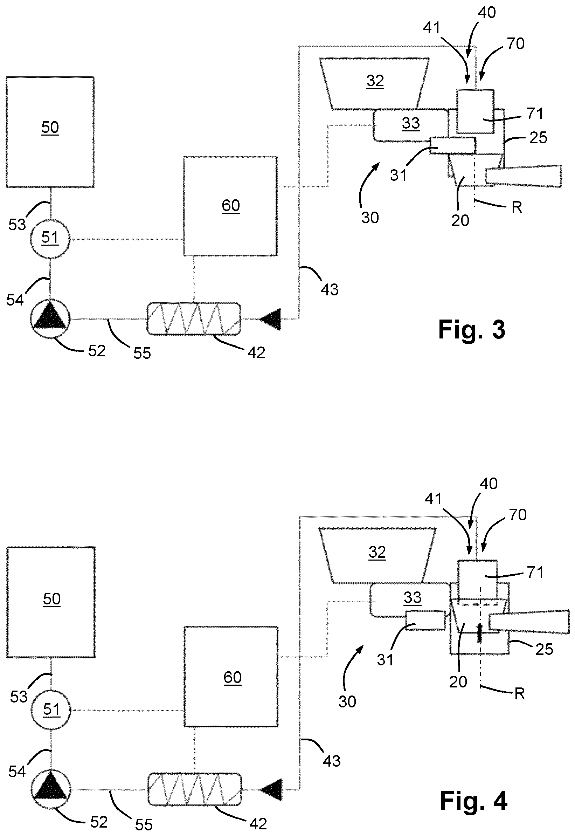

The pump 52 may be of any suitable type. The flow meter 51 is functional to provide a flow measurement to the controller 60, and the controller 60 is configured to control the heater 42 and the pump 52 on the basis of input from the flow meter 51 for the purpose of realizing a coffee making process in a proper manner. Alternatively, the flow meter 51 is omitted and dosing and flow rate control are done through appropriate control of the pump 52, such as by setting a power level and a pump time. In figures 3-6, control signals between the controller 60 and a number of components of the coffee machine 100 are represented through dashed lines.

The coffee machine 100 is designed such that when the portafilter 20 is in the functional condition, the portafilter 20 can be moved between different positions relative to the main housing 11, including a position involving a relative position of the portafilter 20 and the ground coffee outlet 31 at which the portafilter 20 is enabled to receive ground coffee from the ground coffee outlet 31, and a position involving a relative position of the portafilter 20 and the brew water outlet 41 at which the portafilter 20 is enabled to receive brew water from the brew water outlet 41. For the sake of completeness, it is noted that in the above-described practical case of the portafilter 20 comprising a filter basket 21 and a handle 22, the filter basket 21 is the component of the portafilter 20 that is relevant in this respect. In the following, the first position of the portafilter 20/ filter basket 21 relative to the main housing 11 will be referred to as coffee receiving position of the portafilter 20, and the second position of the portafilter 20/filter basket 21 relative to the main housing 11 will be referred to as brewing position of the portafilter 20. The coffee machine 100 of the shown embodiments is of the type comprising a closing and tamping system 70 for closing the portafilter 20/filter basket 21 when the portafilter is in the brewing position and for compacting ground coffee in the portafilter 20/filter basket 21 by means of a piston 71 that is dimensioned to fit in the filter basket 21.

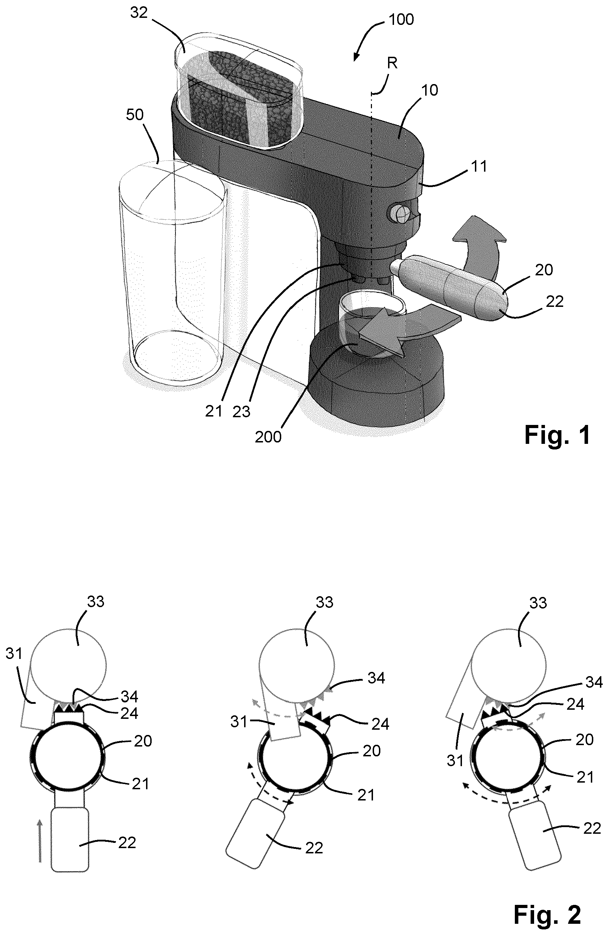

As mentioned, the portafilter 20 can be moved between different positions relative to the main housing 11. The fact is that the portafilter 20 in the functional condition is rotatable relative to the main housing 11 about a rotation axis R defined by a central longitudinal axis of the portafilter 20/filter basket 21. The coffee receiving position of the portafilter 20 is a first angular position of the portafilter 20 about the rotation axis R, and the brewing position of the portafilter 20 is a second angular position of the portafilter 20 about the rotation axis R. In figure 2, the coffee receiving position of the portafilter 20 is shown in the centre of the figure, and the brewing position of the portafilter 20 is shown at the right side of the figure. Further, at the left side of figure 2, a third position of the portafilter 20 is shown in which the angular position of the portafilter 20 about the rotation axis R is between the first angular position of the portafilter 20 about the rotation axis R and the second angular position of the portafilter 20 about the rotation axis R. The third position may for instance be a position at which the portafilter 20 is to be initially placed in/on the main unit 10 by the user, and also at which the portafilter 20 is to be removed from the main unit 10 after a brew cycle. In view thereof, the third position will hereinafter be referred to as placement and removal position. At the left side of figure 2, a direction of placement of the portafilter 20 is indicated by means of an arrow. In figure 1, the rotary movement of the portafilter 20 about the rotation axis R from the placement and removal position to the coffee receiving position, and from the placement and removal position to the brewing position is indicated by means of arrows. In alternative embodiments of a coffee machine according to the present invention, the third position may be omitted. In such case, one of the first and second angular positions may serve as placement and removal position. Or one of the first and second angular positions may serve as placement position and the other one of the first and second angular positions may serve as removal position.

In view of the foregoing, using the coffee machine 100 to make coffee involves the following actions:
- user actions aimed at ensuring that there is a sufficient quantity of coffee beans in the coffee bean reservoir 32, that there is a sufficient quantity of water in the water reservoir 50, and that the portafilter 20 is clean and does not contain any coffee residue,
- a user action aimed at ensuring that the portafilter 20 is in the functional condition and at the placement and removal position,
- a user action or an automated action aimed at putting the portafilter 20 from the placement and removal position to the coffee receiving position, wherein it is noted that in case a user action is applicable, this only requires taking hold of the handle 22 of the portafilter 20 and manipulating the handle 22 so that the portafilter 20 is made to rotate about the rotation axis R in the direction towards the coffee receiving position,
- a user action or an automated action of activating the ground coffee supply unit 30 to grind a quantity of coffee beans and supply the ground coffee thus obtained to the portafilter 20/filter basket 21 through the ground coffee outlet 31,
- a user action or an automated action aimed at putting the portafilter 20 filled with ground coffee from the coffee receiving position to the brewing position, wherein it is noted that in case a user action is applicable, this only requires taking hold of the handle 22 of the portafilter 20 and manipulating the handle 22 so that the portafilter 20 is made to rotate about the rotation axis R in the direction towards the brewing position,
- a user action or an automated action of activating the closing and tamping system 70 to close the portafilter 20/filter basket 21 in order to thereby create a brew chamber, and to compact the ground coffee in the portafilter 20, and
- a user action or an automated action of activating the pump 52 and, optionally, the heater 42 so that water is supplied in a pressurized and possibly heated condition to the brew chamber through the brew water outlet 41 so that a coffee brewing action takes place in the brew chamber.

As illustrated in figure 1, it is practical if the portafilter 20 is equipped with a lower spout 23 at the position of the filter basket 21 so that freshly brewed coffee may be dispensed directly from the portafilter to a receptacle 200 such as a cup or glass placed at a position underneath the portafilter 20.

The coffee machine 100 is devoid of components configured to enable automatic discharge of a used coffee puck from the portafilter 20. This means that the user is supposed to remove the portafilter 20 from the main unit 10 after the coffee making process has ended, and to empty and preferably clean the portafilter 20. The portafilter 20 may be provided with ejection means for easy removal of the used puck from the filter basket 21. Such ejection means are known per se.

Ease of use of the coffee machine 100 may be obtained if most or all of the above actions which can be automated actions are automated actions indeed. The controller 60 can be programmed to execute an algorithm designed to realize those actions in a proper manner without a need for interference from the user. On the other hand, it is possible to have a high degree of user involvement in the operation of the coffee machine 100 if so desired. In this respect, it is noted that it is possible that the coffee machine 100 is designed to enable the user to set one of various operation modes of the coffee machine 100, each of the operation modes involving a different degree of user involvement. For the purpose of enabling the user to interact with the controller 60, it is practical if the coffee machine 100 comprises a user interface, which user interface may come in any suitable form such as one or more buttons on the main unit 10, a touchscreen on the main unit 10, an app on a smartphone for wireless communication with the controller 60, etc. Interaction of the user with the controller 60 may not only be useful for initiating actions during operation of the coffee machine 100 to realize a coffee making process, but also for indicating characteristics of the coffee and thereby making the controller 60 set appropriate operation values of the pump 52 and/or the heater 42, for example.

It may especially be desirable to let the action of putting the portafilter 20 from the placement and removal position to the coffee receiving position be a user action. This may provide the user with a barista feel and with a sense of being in control of initiating the coffee making process. In fact, if said action is a user action, indeed, the portafilter 20 can have a user interface functionality, namely in case said action is used to automatically activate the ground coffee supply unit 30. The same is applicable to the action of putting the portafilter 20 filled with ground coffee from the coffee receiving position to the brewing position if this is a user action, namely in case said action is used to automatically activate closing and tamping system 70, the pump 52 and, optionally, the heater 42. If the action of putting the portafilter 20 filled with ground coffee from the coffee receiving position to the brewing position is a user action, indeed, it may be practical if the coffee machine 100 comprises an indicator such as a light that is operated by the controller 60 to indicate that the operation of the ground coffee supply unit 30 has ended. It is also possible that the fact that the grinder stops making sound when the operation of the ground coffee supply unit 30 ends is taken as an indication.

The action of rotating the portafilter 20 about the rotation axis R can easily be performed by the user and allows for intuitive control of the coffee machine 100 by the user. Complexity of design of the coffee machine 100 can be minimal. When at least part of the rotary movement of the portafilter 20 is a user action, kinematic energy supplied during this user action may be stored in a spring or the like, and used later, to automatically continue or complete the rotary movement of the portafilter.

Another aspect of the rotatable arrangement of the portafilter 20 relative to the main housing 11 is that the rotation of the portafilter 20 can be used to advantage. This is illustrated in figure 2, showing an advantageous option in which the portafilter 20 is mechanically coupled to the ground coffee outlet 31. According to the illustrated embodiment, both the portafilter 20 and an assembly of the grinder 33 and the ground coffee outlet 31 are provided with a row of teeth 24, 34. The positioning of the respective rows on the portafilter 20 and the assembly of the grinder 33 and the ground coffee outlet 31 is such that the teeth 24 of the portafilter 20 come into engagement with the teeth 34 of the assembly when the portafilter 20 is put to the placement and removal position, as can be seen at the left side of figure 2. A subsequent rotation of the portafilter 20 to the coffee receiving position causes the assembly to be rotated in the opposite direction and the ground coffee outlet 31 to become positioned above the portafilter in the process, as can be seen in the centre of figure 2. A subsequent rotation of the portafilter 20 to the brewing position causes the assembly to be rotated in the opposite direction and the ground coffee outlet 31 to become moved away from above the portafilter 20 in the process, as can be seen at the right side of figure 2. In the centre and at the right side of figure 2, dashed arrows are used to indicate the various rotary movements. The fact that the ground coffee outlet 31 can be moved in and out of the area above the portafilter 20 can be an enabling fact in successively supplying ground coffee to the portafilter 20 and forming the brew chamber and supplying brew water to the portafilter 20 without needing to move the portafilter 20 in a direction transverse to the rotation axis R. In an alternative embodiment (not shown), the grinder 33 may be stationary and the coffee outlet 31 may be rotatably arranged relative to the grinder 33. In such case, the row of teeth 34 may be directly provided on the coffee outlet 31. Rotation of the portafilter 20 will result in rotation of the coffee outlet 31 as described before but with the grinder 33 remaining stationary.

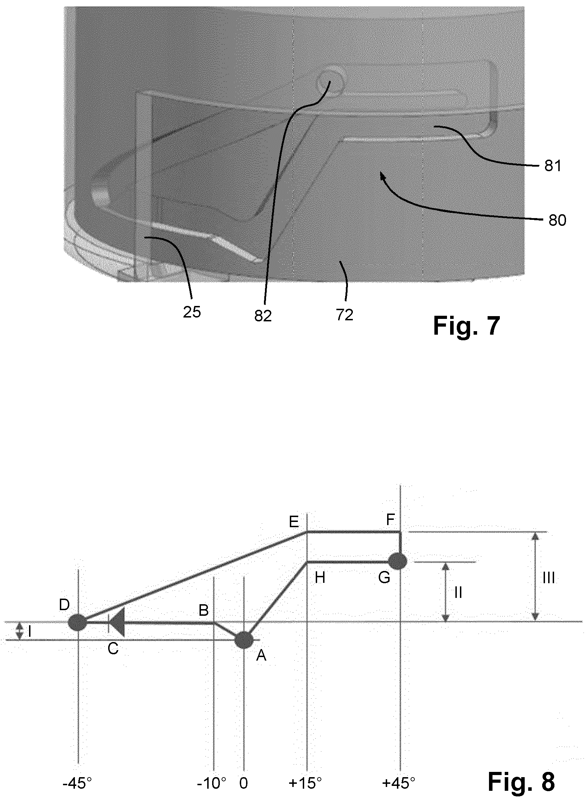

Another advantageous way of using the rotation of the portafilter 20 about the rotation axis R involves setting a level of the portafilter 20 in the main housing 11 in dependence on the angular position of the portafilter 20 about the rotation axis R. Doing so may particularly be aimed at automatically putting the portafilter 20 to a higher level in the main housing 11 when the portafilter 20 is put from the coffee receiving position to the brewing position, so that the portafilter 20 is fitted to the closing and tamping system 70 in a proper way to form the brew chamber. A practical embodiment of a level setting mechanism 80 of the coffee machine 100 is illustrated in figure 7. In this embodiment, the level setting mechanism 80 comprises a pin-groove combination in which the groove 81 accommodates the pin 82 and defines how the pin 82 is displaced in a longitudinal direction, i.e. a direction in which the rotation axis R extends and which in the presented example corresponds to a substantially vertical direction in a normal, operational orientation of the main unit 10 and the portafilter 20, when the groove 81 and the pin 82 are rotated relative to each other. In the shown example, the pin 82 is associated with the portafilter 20 through a portafilter carrier 25 that is configured to accommodate and guide the portafilter 20 during at least part of the rotary movement. The groove 81 is associated with the main housing 11 by being located on a component that is fixedly arranged in/on the main housing 11, such as a holder 72 of the piston 71 of the closing and tamping system 70. In respect of the portafilter carrier 25, it is noted that this component may be provided with more features, such as the teeth 24 mentioned earlier with reference to figure 2, so that the design of the portafilter 20 can be without irregularities which might otherwise constitute a hindrance to using, e.g. cleaning, and manipulating the portafilter 20, especially when the portafilter 20 is removed from the main unit 10.

In the present example, the groove 81 generally is in the shape of a closed loop. With reference to figure 8, various aspects of the specific shape of the groove 81 are elucidated, wherein the positioning of the pin 82 in the groove 81 is related to the positioning of the portafilter 20 (and portafilter carrier 25) relative to the main housing 11.
- Position A is the placement and removal position, which is a stable and neutral position to which a rotation angle of 0° is attributed.
- When the portafilter 20 is rotated from the placement and removal position A towards the coffee receiving position, a part of the groove 81 that is going slightly up is followed. B marks the end of this part of the groove 81 and may be located for instance at a rotation angle of about -10°.
- When the portafilter 20 is rotated even further, a part of the groove 81 that has a gradually decreasing depth in a radial direction, is followed. C marks the end of this part of the groove 81, and this is where the depth of the groove 81 is the smallest. Beyond position C, the depth of the groove 81 transitions to the original depth, preferably abruptly or with a steep slope so as to form a ratchet-type tooth that allows pin 82 to follow the groove 81 from position B to position D but prevents the pin 82 to follow the groove 81 in opposite direction (i.e. from position D back to position B).
- Position D is the coffee receiving position. It is a stable position. It may be located for instance at a rotation angle of about -45°, as illustrated in Figure 8. As explained, when the portafilter 20 is in this position, the ground coffee supply unit 30 is operated to supply ground coffee to the portafilter 20 through the ground coffee outlet 31. Operation of the ground coffee supply unit 30 can be initiated in any suitable way, such as through user action, or through automated action that may follow from toggling a switch (e.g. by the portafilter 20 or portafilter carrier 25, when approaching or arriving at position D) or using a sensor arrangement, e.g. a Hall sensor or an optical sensor, for example. The portafilter 20 preferably stays at the coffee receiving position D during the entire time that the ground coffee supply unit 30 is operated.
- From position D, the portafilter 20 is then rotated in an opposite direction, i.e. a direction towards the brewing position. A part of the groove 81 goes up in a steep fashion until a position E is reached, which may for instance be located at a rotation angle of about +15°. In this way, the portafilter 20 is displaced, e.g. moved vertically upward in the illustrated embodiment, such that interaction with the closing and tamping system 70 can take place.
- From position E, the portafilter 20 may be further rotated towards position F. Position F is the brewing position. In the illustrated embodiment, it is located at a rotation angle of about +45°. In this position, the portafilter 20 is in a locked position, that is, the portafilter 20 is locked relative to the closing and tamping system 70. The locked position may for instance be realized by means of a bayonet coupling, which may be established while the portafilter 20 is rotated from position E to position F. The locked position may be maintained as long as the coffee brewing action lasts. The brewing action can be initiated in any suitable way, such as through user action, or through automated action that may follow from toggling a switch (e.g. by the portafilter 20 or portafilter carrier 25, when approaching or arriving at position E or F) or using a sensor arrangement, e.g. a Hall sensor or an optical sensor, for example.

Preferably, the portafilter 20 is coupled to the portafilter carrier 25 in such a way that at position F the portafilter 20 is allowed to become decoupled from the portafilter carrier 25, at least in vertical direction, in order to lock the portafilter 20 to the closing and tamping system 70, and to allow the portafilter 20 to become coupled to the portafilter carrier 25 again, when the portafilter is moved away from position F. Thus, at position F, the portafilter carrier 25 may become detached from the portafilter 20. More specifically, at position F, the portafilter 20 may be locked to the closing and tamping system 70 while the portafilter carrier 25 may move downward to position G under influence of gravity. Thus, during the coffee brewing action, the portafilter 20 can be locked in position F while the portafilter carrier 25 remains stable at position G.

After brewing, the portafilter 20 may be moved back from position F in the direction of position E to unlock the portafilter 20 from its locked position. Via aforementioned coupling means between the portafilter 20 and the portafilter carrier 25, this movement may cause portafilter carrier 25 to be entailed along. Thus, the unlocking movement of the portafilter 20 may be used to move the portafilter carrier 25 along groove 81 from position G to position H. Position H may be at the same level as position G and may for example be at an angular position of about +15°.

At position H, the portafilter 20 will be fully unlocked, that is, will no longer be locked to the closing and tamping system 70 and thus may fall down into the portafilter carrier 25 under influence of gravity. From position H onward, the portafilter 20 and portafilter carrier 25 can then be moved back together wherein a part of the groove 81 going down towards position A is followed. Since position A is at a lowest position relative to both position H and position B, stability of position A is guaranteed.

Differences between the levels of the various positions may be in an order of millimetres. For example, a height difference I between positions D and A may be about 2 mm, a height difference II between positions D and G may be about 12 mm, and a height difference III between positions D and E may be about 17 mm.

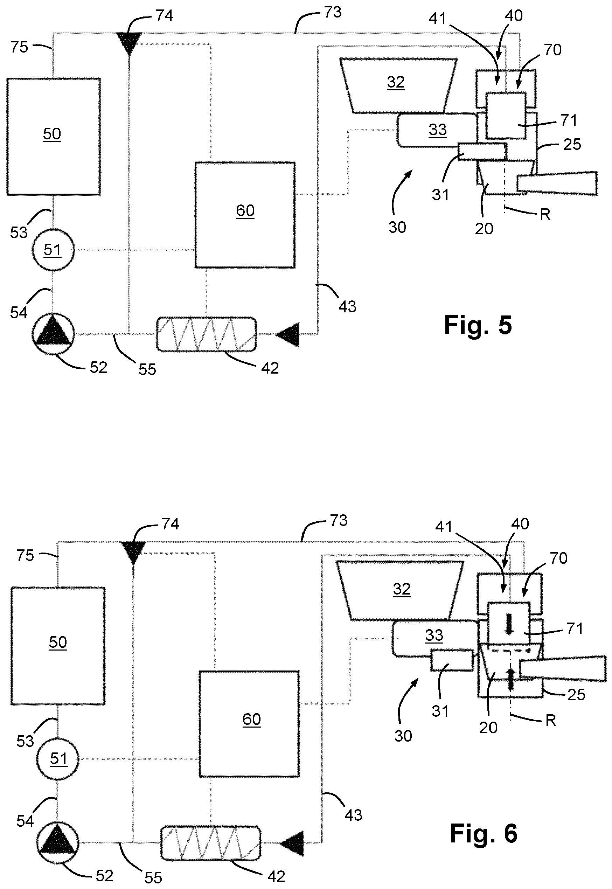

Two possible ways in which the portafilter 20 and the closing and tamping system 70 can be made to interact with each other in an effective way so that the ground coffee is tamped to create a coffee puck in the portafilter 20 and a brew chamber is formed are now explained with reference to figures 3 and 4, and to figures 5 and 6, respectively.

Figures 3 and 4 illustrate an option according to which a piston 71 and other components of the closing and tamping system 70 are at a fixed position in the main housing 11, and according to which only the portafilter 20 is movable in the longitudinal direction, wherein the portafilter 20 at the brewing position is moved upwards to lock to the closing and tamping system 70 and to have the piston 71 tamp the ground coffee in the process, as indicated by means of an upward arrow in figure 4.

Figures 5 and 6 illustrate an option according to which both the piston 71 and the portafilter 20 are movable in the longitudinal direction relative to each other, wherein the portafilter 20 at the brewing position is moved upwards and the piston 71 is moved downwards. By putting to practice this option, it is achieved that tamping can be done with higher force and/or larger stroke. In the shown example, the piston 71 is hydraulically connected to the pump 52 through a fluid coupling 73 and a valve 74 that may normally be closed and be opened when tamping is to take place. The valve 74 may be actively controlled by the controller 60 or may be a passive valve reacting to pressure. Further, a drain fluid coupling 75 may be present between the valve 74 and the water reservoir 50 to enable a return of water to the water reservoir 50 when the piston 71 is to be retracted. A movement of the piston 71 and the portafilter 20 towards each other is indicated in figure 6 by means of opposite arrows. It is not essential that the piston 71 is hydraulically driven by the pump 52 that is present for the purpose of the coffee making functionality of the coffee machine 100, although this is practical in view of costs, and also compactness of the coffee machine 100. Alternatively, another way of driving the piston 71 may be applied, e.g. via a motor or manually operable lever. An embodiment of the coffee machine 100 in which the piston 71 is also driven hydraulically yet by means of a second pump is also feasible.

It follows from the foregoing that a coffee machine 100 is provided that is of the hybrid type, i.e. of the type comprising an internal grinder 33 and a brew chamber in the form of a portafilter 20 that is removably mounted to the main unit 10 and is emptied externally by the user as part of the normal operation of the coffee machine 100. After the portafilter 20 is put to the placement and removal position, the portafilter 20 can be rotated about the rotation axis R. The rotation axis R may be stationary in which case the portafilter 20 will not perform any movement in a direction transverse to the rotation axis R during its rotation about the rotation axis R. Alternatively, the rotation axis may be mobile, in which case rotation of the portafilter about the rotation axis R may be accompanied by a movement in a direction transverse to the rotation axis R. In the coffee machine 100, rotating the portafilter 20 about the rotation axis R is what is done to displace the portafilter 20 from the placement and removal position to the coffee receiving position, from the coffee receiving position to the brewing position, and from the brewing position back to the placement and removal position. Preferably, at least the initiation of the rotary movement of the portafilter 20 takes place manually. It is possible that at least a part of the rotary movement of the portafilter 20 takes place in an automated fashion, e.g. hydraulically, electromechanically, or via kinematic energy stored in a spring or the like during an initial manually actuated movement of the portafilter 20. In an alternative embodiment, all of the actions of rotating the portafilter 20 about the rotation axis R can be performed manually. The coffee machine 100 is of compact design. Putting the portafilter 20 to the placement and removal position, possibly rotating the portafilter 20 from that position to one or both of the coffee receiving position and the brewing position, and eventually back to the placement and removal position are actions which can easily be done by any user. As explained, the coffee machine 100 can be configured such that the ground coffee supply unit 30 is automatically operated when the portafilter 20 has reached the coffee receiving position, and also that formation of the closed brew chamber, tamping and coffee brewing are automatically done when the portafilter 20 has reached the brewing position. Also, it is possible to use the rotary movement of the portafilter 20 to bring about movement of the ground coffee outlet 31 and/or to bring about displacement of the portafilter 20 in the longitudinal direction.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details that are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

Notable aspects of the invention are summarized as follows. In the context of coffee making, a coffee machine 100 is provided, comprising a main unit 10, a portafilter 20, and optionally a portafilter carrier 25, wherein the portafilter 20 is removably mounted to the main unit 10. In the coffee machine 100, rotating the portafilter 20 and/or the portafilter carrier 25 about a rotation axis R is what is done to displace the portafilter 20 from a placement and removal position to a coffee receiving position, from the coffee receiving position to a brewing position, and from the brewing position back to the placement and removal position. The rotation axis R may be stationary or not. In other words, rotation of the portafilter about rotation axis R may be done without or with movement of the portafilter 20 in a direction transverse to the rotation axis R. It is possible to use the rotary movement of the portafilter 20 and/or portafilter carrier 25 to bring about movement of a ground coffee outlet 31 in the main unit 10 and/or to bring about displacement of the portafilter 20 in a direction in which the rotation axis R extends.

## Claims

1. A coffee machine (100), comprising:
a main unit (10) comprising a main housing (11) accommodating a ground coffee supply unit (30) including a ground coffee outlet (31) and a brew water supply unit (40) including a brew water outlet (41);
a portafilter (20) configured to be put to a functional condition in which the portafilter (20) is removably combined with the main unit (10); and
optionally, a portafilter carrier (25) configured to receive and accommodate the portafilter (20) in the functional condition,
**characterized in that**:
the portafilter (20) in the functional condition is rotatable about a rotation axis (R) defined by a central longitudinal axis of the portafilter (20), between different positions relative to the main housing (11), including:
a first position or coffee receiving position, with the portafilter (20) at a first angular position about the rotation axis (R), the portafilter (20) and the ground coffee outlet (31) are at a relative position at which the portafilter (20) is enabled to receive ground coffee from the ground coffee outlet (31); and
a second position or brewing position, with the portafilter (20) at another, second angular position about the rotation axis (R), the portafilter (20) and the brew water outlet (41) are at a relative position at which the portafilter (20) is enabled to receive brew water from the brew water outlet (41).

2. The coffee machine (100) as claimed in claim 1, comprising a level setting mechanism (80) configured to vary a position of the portafilter (20) in the longitudinal direction relative to the main housing (11) in dependence on the angular position of the portafilter (20) about the rotation axis (R).

3. The coffee machine (100) as claimed in claim 2, wherein the level setting mechanism (80) is configured to set a higher position of the portafilter (20) in the longitudinal direction relative to the main housing (11) at the second angular position about the rotation axis (R) than at the first angular position about the rotation axis (R).

4. The coffee machine (100) as claimed in claim 2 or 3, wherein the level setting mechanism (80) comprises a pin-groove combination (81, 82) in which the groove (81) accommodates the pin (82) and dictates the path of the pin (82) in the longitudinal direction as the portafilter (20) is rotated about the rotation axis (R).

5. The coffee machine (100) as claimed in claim 4, wherein the groove (81) generally is in the shape of a closed loop.

6. The coffee machine (100) as claimed in claim 4 or 5, wherein the groove (81) is shaped to define at least the position of the portafilter (20) in the longitudinal direction relative to the main housing (11) at the first angular position about the rotation axis (R) and the position of the portafilter (20) in the longitudinal direction relative to the main housing (11) at the second angular position about the rotation axis (R) as stable positions (D, G) in the longitudinal direction.

7. The coffee machine (100) as claimed in any of claims 1-6, wherein the ground coffee outlet (31) is displaceable in the main housing (11), and wherein the coffee machine (100) comprises a ground coffee outlet positioning mechanism (24, 34) configured to vary a position of the ground coffee outlet (31) in the main housing (11) in dependence on the angular position of the portafilter (20) and/or the optional portafilter carrier (25) about the rotation axis (R).

8. The coffee machine (100) as claimed in claim 7, wherein the ground coffee outlet positioning mechanism (24, 34) is configured to establish a mechanical link between the ground coffee outlet (31) on the one hand and the portafilter (20) and/or the optional portafilter carrier (25)on the other hand.

9. The coffee machine (100) as claimed in any of claims 1-8, wherein the portafilter (20) and/or the optional portafilter carrier (25) is rotated about rotation axis (R) between the first angular position and the second angular position while the rotation axis (R) remains stationary, that is, without moving in a direction transverse to the rotation axis (R).

10. The coffee machine (100) as claimed in any of claims 1-9, comprising at least one of:
an arrangement that is actuable under the influence of the portafilter (20) being put to the first angular position about the rotation axis (R) to initiate supply of ground coffee to the portafilter (20) through the ground coffee outlet (31), and
an arrangement that is actuable under the influence of the portafilter (20) being put to the second angular position about the rotation axis (R) to initiate supply of brew water to the portafilter (20) through the brewwater outlet (41).

11. The coffee machine (100) as claimed in any of claims 1-10, comprising a driving mechanism configured to bring about rotation of the portafilter (20) about the rotation axis (R), at least from the first angular position about the rotation axis (R) to the second angular position about the rotation axis (R).

12. The coffee machine (100) as claimed in any of claims 1-11, comprising a blocking arrangement configured to allow the portafilter (20) to be in the first angular position about the rotation axis (R) only one time after having been combined with the main unit (10).

13. The coffee machine (100) as claimed in any of claims 1-12, comprising a closing and tamping system (70) configured to close the portafilter (20) and to provide tamping of ground coffee contained in the portafilter (20), and arranged to interact with the portafilter (20) while or after the portafilter (20) is rotated from the first angular position about the rotation axis (R) to the second angular position about the rotation axis (R).

14. The coffee machine (100) as claimed in any of claims 1-13, comprising a holder arrangement configured to keep a position of the portafilter (20) in the longitudinal direction in the main housing (11) fixed as long as the portafilter (20) is at the second angular position about the rotation axis (R).

15. The coffee machine (100) as claimed in any of claims 1-14, wherein the ground coffee supply unit (30) comprises a grinder (33).

## Patentansprüche

1. Kaffeemaschine (100), umfassend:
eine Haupteinheit (10), die ein Hauptgehäuse (11) umfasst, das eine Kaffeepulverzufuhreinheit (30), die einen Kaffeepulverauslass (31) einschließt, und eine Brühwasserzufuhreinheit (40), die einen Brühwasserauslass (41) einschließt, unterbringt;
einen Siebträger (20), der so konfiguriert ist, dass er in einen funktionsfähigen Zustand versetzt wird, in dem der Siebträger (20) abnehmbar mit der Haupteinheit (10) kombiniert ist; und
optional eine Siebträger-Halterung (25), die so konfiguriert ist, dass sie den Siebträger (20) im funktionsfähigen Zustand aufnimmt und unterbringt,
**dadurch gekennzeichnet, dass**:
der Siebträger (20) im funktionsfähigen Zustand um eine durch eine zentrale Längsachse des Siebträgers (20) definierte Drehachse (R) zwischen verschiedenen Positionen relativ zum Hauptgehäuse (11) drehbar ist, einschließlich:
einer ersten Position oder Kaffeeaufnahmeposition, bei der sich der Siebträger (20) in einer ersten Winkelposition um die Drehachse (R) befindet, der Siebträger (20) und der Kaffeepulverauslass (31) sich in einer relativen Position befinden, in der der Siebträger (20) Kaffeepulver aus dem Kaffeepulverauslass (31) aufnehmen kann; und
einer zweiten Position oder Brühposition, bei der sich der Siebträger (20) in einer anderen, zweiten Winkelposition um die Drehachse (R) befindet, der Siebträger (20) und der Brühwasserauslass (41) sich in einer relativen Position befinden, in der der Siebträger (20) Brühwasser aus dem Brühwasserauslass (41) aufnehmen kann.

2. Kaffeemaschine (100) nach Anspruch 1, umfassend einen Höheneinstellungsmechanismus (80), der so konfiguriert ist, dass er die Position des Siebträgers (20) in Längsrichtung relativ zum Hauptgehäuse (11) in Abhängigkeit von der Winkelposition des Siebträgers (20) um die Drehachse (R) verändert.

3. Kaffeemaschine (100) nach Anspruch 2, wobei der Höheneinstellungsmechanismus (80) so konfiguriert ist, dass er den Siebträger (20) in Längsrichtung relativ zum Hauptgehäuse (11) in der zweiten Winkelposition um die Drehachse (R) höher positioniert als in der ersten Winkelposition um die Drehachse (R).

4. Kaffeemaschine (100) nach Anspruch 2 oder 3, wobei der Höheneinstellungsmechanismus (80) eine Stift-Nut-Kombination (81, 82) umfasst, in der die Nut (81) den Stift (82) unterbringt und den Weg des Stifts (82) in Längsrichtung vorgibt, wenn der Siebträger (20) um die Drehachse (R) gedreht wird.

5. Kaffeemaschine (100) nach Anspruch 4, wobei die Nut (81) im Allgemeinen die Form einer geschlossenen Schleife aufweist.

6. Kaffeemaschine (100) nach Anspruch 4 oder 5, wobei die Nut (81) so geformt ist, dass sie mindestens die Position des Siebträgers (20) in Längsrichtung relativ zum Hauptgehäuse (11) an der ersten Winkelposition um die Drehachse (R) und die Position des Siebträgers (20) in Längsrichtung relativ zum Hauptgehäuse (11) an der zweiten Winkelposition um die Drehachse (R) als stabile Positionen (D, G) in Längsrichtung definiert.

7. Kaffeemaschine (100) nach einem der Ansprüche 1-6, wobei der Kaffeepulverauslass (31) im Hauptgehäuse (11) verschiebbar ist und wobei die Kaffeemaschine (100) einen Positionierungsmechanismus für den Kaffeepulverauslass (24, 34) umfasst, der so konfiguriert ist, dass er eine Position des Kaffeepulverauslasses (31) im Hauptgehäuse (11) in Abhängigkeit von der Winkelposition des Siebträgers (20) und/oder der optionalen Siebträger-Halterung (25) um die Drehachse (R) verändert.

8. Kaffeemaschine (100) nach Anspruch 7, wobei der Positionierungsmechanismus für den Kaffeepulverauslass (24, 34) so konfiguriert ist, dass er eine mechanische Verbindung zwischen dem Kaffeepulverauslass (31) einerseits und dem Siebträger (20) und/oder der optionalen Siebträger-Halterung (25) andererseits herstellt.

9. Kaffeemaschine (100) nach einem der Ansprüche 1-8, wobei der Siebträger (20) und/oder die optionale Siebträger-Halterung (25) um die Drehachse (R) zwischen der ersten Winkelposition und der zweiten Winkelposition gedreht wird, während die Drehachse (R) stationär bleibt, d.h. sich nicht in einer Richtung quer zur Drehachse (R) bewegt.

10. Kaffeemaschine (100) nach einem der Ansprüche 1-9, umfassend mindestens eines von:
einer Anordnung, die dadurch betätigt werden kann, dass der Siebträger (20) in die erste Winkelposition um die Drehachse (R) versetzt wird, um die Zufuhr von Kaffeepulver zum Siebträger (20) durch den Kaffeepulverauslass (31) einzuleiten, und
einer Anordnung, die dadurch betätigt werden kann, dass der Siebträger (20) in die zweite Winkelposition um die Drehachse (R) versetzt wird, um die Zufuhr von Brühwasser zum Siebträger (20) durch den Brühwasserauslass (41) einzuleiten.

11. Kaffeemaschine (100) nach einem der Ansprüche 1-10, umfassend einen Antriebsmechanismus, der so konfiguriert ist, dass er eine Drehung des Siebträgers (20) um die Drehachse (R) mindestens von der ersten Winkelposition um die Drehachse (R) zur zweiten Winkelposition um die Drehachse (R) bewirkt.

12. Kaffeemaschine (100) nach einem der Ansprüche 1-11, umfassend eine Sperranordnung, die so konfiguriert ist, dass sie dem Siebträger (20) nur einmal erlaubt, sich in der ersten Winkelposition um die Drehachse (R) zu befinden, nachdem er mit der Haupteinheit (10) kombiniert wurde.

13. Kaffeemaschine (100) nach einem der Ansprüche 1-12, umfassend ein Schließ- und Stopfsystem (70), das zum Schließen des Siebträgers (20) und zum Bereitstellen von Stopfen des im Siebträger (20) enthaltenen Kaffeepulvers konfiguriert ist und so angeordnet ist, dass es mit dem Siebträger (20) interagiert, während oder nachdem der Siebträger (20) von der ersten Winkelposition um die Drehachse (R) zur zweiten Winkelposition um die Drehachse (R) gedreht wurde.

14. Kaffeemaschine (100) nach einem der Ansprüche 1-13, umfassend eine Halterungsanordnung, die so konfiguriert ist, dass sie eine Position des Siebträgers (20) in Längsrichtung im Hauptgehäuse (11) so lange fest beibehält, wie sich der Siebträger (20) in der zweiten Winkelposition um die Drehachse (R) befindet.

15. Kaffeemaschine (100) nach einem der Ansprüche 1-14, wobei die Kaffeepulverzufuhreinheit (30) ein Mahlwerk (33) umfasst.

## Revendications

1. Machine à café (100), comprenant :
une unité principale (10) comprenant un boîtier principal (11) abritant une unité d'alimentation en café moulu (30) incluant une sortie de café moulu (31) et une unité d'alimentation en eau d'infusion (40) incluant une sortie d'eau d'infusion (41) ;
un porte-filtre (20) configuré pour être mis dans un état de fonctionnement dans lequel le porte-filtre (20) est combiné de manière amovible avec l'unité principale (10) ; et
facultativement, un support de porte-filtre (25) configuré pour recevoir et accueillir le porte-filtre (20) en état de fonctionnement,
**caractérisée en ce que** :
le porte-filtre (20) en état de fonctionnement peut tourner autour d'un axe de rotation (R) défini par un axe longitudinal central du porte-filtre (20), entre différentes positions par rapport au boîtier principal (11), incluant :
une première position ou position de réception de café, avec le porte-filtre (20) dans une première position angulaire autour de l'axe de rotation (R), le porte-filtre (20) et la sortie de café moulu (31) sont dans une position relative à laquelle le porte-filtre (20) est en mesure de recevoir le café moulu provenant de la sortie de café moulu (31) ; et
une seconde position ou position d'infusion, avec le porte-filtre (20) à une autre seconde position angulaire autour de l'axe de rotation (R), le porte-filtre (20) et la sortie d'eau d'infusion (41) sont dans une position relative à laquelle le porte-filtre (20) est en mesure de recevoir l'eau d'infusion de la sortie d'eau d'infusion (41).

2. Machine à café (100) selon la revendication 1, comprenant un mécanisme de réglage de niveau (80) configuré pour faire varier la position du porte-filtre (20) dans la direction longitudinale par rapport au boîtier principal (11) en fonction de la position angulaire du porte-filtre (20) autour de l'axe de rotation (R).

3. Machine à café (100) selon la revendication 2, dans laquelle le mécanisme de réglage de niveau (80) est configuré pour régler une position plus élevée du porte-filtre (20) dans la direction longitudinale par rapport au boîtier principal (11) à la seconde position angulaire autour de l'axe de rotation (R) qu'à la première position angulaire autour de l'axe de rotation (R).

4. Machine à café (100) selon la revendication 2 ou 3, dans laquelle le mécanisme de réglage de niveau (80) comprend une combinaison goupille-rainure (81, 82) dans laquelle la rainure (81) accueille la goupille (82) et détermine le chemin de la goupille (82) dans la direction longitudinale lorsque le porte-filtre (20) est tourné autour de l'axe de rotation (R).

5. Machine à café (100) selon la revendication 4, dans laquelle la rainure (81) présente généralement la forme d'une boucle fermée.

6. Machine à café (100) selon la revendication 4 ou 5, dans laquelle la rainure (81) est conçue pour définir au moins la position du porte-filtre (20) dans la direction longitudinale par rapport au boîtier principal (11) à la première position angulaire autour de l'axe de rotation (R) et la position du porte-filtre (20) dans la direction longitudinale par rapport au boîtier principal (11) à la seconde position angulaire autour de l'axe de rotation (R) comme positions stables (D, G) dans la direction longitudinale.

7. Machine à café (100) selon l'une quelconque des revendications 1-6, dans laquelle la sortie de café moulu (31) est déplaçable dans le boîtier principal (11), et dans laquelle la machine à café (100) comprend un mécanisme de positionnement de sortie de café moulu (24, 34) configuré pour faire varier la position de la sortie de café moulu (31) dans le boîtier principal (11) en fonction de la position angulaire du porte-filtre (20) et/ou du porte-filtre facultatif (25) autour de l'axe de rotation (R).

8. Machine à café (100) selon la revendication 7, dans laquelle le mécanisme de positionnement de sortie de café moulu (24, 34) est configuré pour établir une liaison mécanique entre la sortie de café moulu (31) d'une part et le porte-filtre (20) et/ou le porte-filtre facultatif (25) d'autre part.

9. Machine à café (100) selon l'une quelconque des revendications 1-8, dans laquelle le porte-filtre (20) et/ou le porte-filtre facultatif (25) est tourné autour de l'axe de rotation (R) entre la première position angulaire et la seconde position angulaire tandis que l'axe de rotation (R) reste stationnaire, c'est-à-dire sans se déplacer dans une direction transversale à l'axe de rotation (R).

10. Machine à café (100) selon l'une quelconque des revendications 1-9, comprenant au moins l'un parmi :
un agencement qui est actionnable sous l'influence du porte-filtre (20) placé dans la première position angulaire autour de l'axe de rotation (R) pour initier l'alimentation en café moulu du porte-filtre (20) par la sortie de café moulu (31), et
un agencement qui est actionnable sous l'influence du porte-filtre (20) placé dans la seconde position angulaire autour de l'axe de rotation (R) pour initier l'alimentation en eau d'infusion du porte-filtre (20) par la sortie d'eau d'infusion (41).

11. Machine à café (100) selon l'une quelconque des revendications 1-10, comprenant un mécanisme d'entraînement configuré pour provoquer la rotation du porte-filtre (20) autour de l'axe de rotation (R), au moins de la première position angulaire autour de l'axe de rotation (R) à la seconde position angulaire autour de l'axe de rotation (R).

12. Machine à café (100) selon l'une quelconque des revendications 1-11, comprenant un agencement de blocage configuré pour permettre au porte-filtre (20) d'être dans la première position angulaire autour de l'axe de rotation (R) une seule fois après avoir été combiné avec l'unité principale (10).

13. Machine à café (100) selon l'une quelconque des revendications 1-12, comprenant un système de fermeture et de tassage (70) configuré pour fermer le porte-filtre (20) et pour assurer le tassage du café moulu contenu dans le porte-filtre (20), et agencé pour interagir avec le porte-filtre (20) pendant ou après que le porte-filtre (20) a été tourné de la première position angulaire autour de l'axe de rotation (R) à la seconde position angulaire autour de l'axe de rotation (R).

14. Machine à café (100) selon l'une quelconque des revendications 1-13, comprenant un agencement de support configuré pour maintenir fixe la position du porte-filtre (20) dans la direction longitudinale du boîtier principal (11) tant que le porte-filtre (20) est dans la seconde position angulaire autour de l'axe de rotation (R).

15. Machine à café (100) selon l'une quelconque des revendications 1-14, dans laquelle l'unité d'alimentation en café moulu (30) comprend un broyeur (33).
